# EUROPEAN PATENT SPECIFICATION

(11) **EP 1 693 744 B1**
(45) Date of publication and mention of the grant of the patent: **12.10.2011**
(21) Application number: 06110120.0
(22) Date of filing: 17.02.2006
(51) Int. Cl.: G06F 9/312, G06F 9/315

(54) **Data alignment and sign extension in a processor**
Datenausrichtung und Zeichenausbreitung in einem Prozessor
Alignement de données et extension de signe dans un processeur

(30) Priority: 17.02.2005 US 60142
(43) Date of publication of application: 23.08.2006
(73) Proprietor: Texas Instruments Incorporated, Dallas, TX 75251-190 (US)
(72) Inventor: Singh, Rajinder P., Austin, TX 78750 (US); Chinnakonda, Muralidharan S., Austin, TX 78730 (US); Kaithamana, Bhasi, Austin, TX 78735 (US)
(74) Representative: Holt, Michael

(56) References cited:
- EP-A- 0 902 360
- US-A- 5 761 469
- US-A- 5 819 117
- US-A- 6 085 289
- US-B1- 6 539 467

## Description

This relates generally to data processing in microprocessors and the like; and, in particular, to a high performance method for data alignment and sign extension and a device for performing the same.

### BACKGROUND

A processor uses load instructions to read data from memory. The data that is loaded from the memory generally is loaded in groups of bits. For example, the data may be loaded in groups of 8 bits (i.e., a byte), 16 bits (i.e., a half-word), or 32 bits (i.e., a word). After being loaded, the data is aligned, bit-extended, and transferred to the processor for arithmetic manipulation by way of, for example, a 32-bit data bus. The following example assumes a 32-bit data bus.

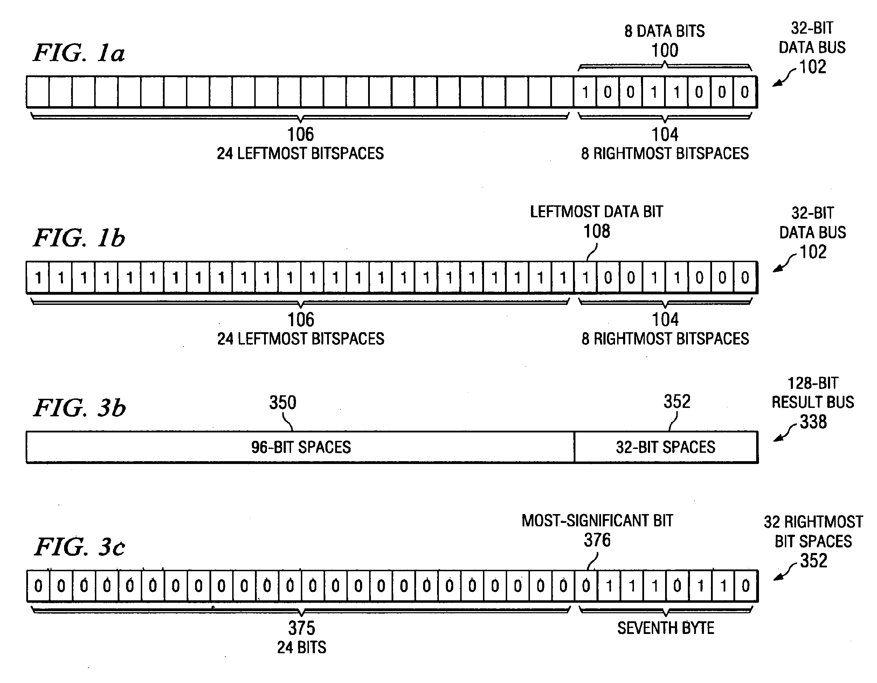

Data alignment involves preferably right-aligning (or possibly left-aligning) the data bits in the data bus. For example, as shown in FIG. 1a, if 8 data bits 100 are loaded, then the 8 data bits 100 are right-aligned in the 32-bit data bus 102, so that the 8 rightmost bit spaces 104 in the data bus102 are occupied. As such, the 24 leftmost bit spaces 106 are unoccupied.

After the 8 data bits 100 are aligned in the data bus 102, the 24 leftmost bit spaces 106, which are unoccupied, are filled with placeholder bits in a process known as bit-extension. Bit-extension generally is performed when the data loaded is less than the width of the data bus (32 bits). One type of bit-extension is sign-extension, where the leftmost data bit 108 (i.e., the most significant bit of the 8 data bits 100) is reproduced into all of the 24 leftmost bit spaces 106. In this way, the entire data bus 102 is filled with bits. For example, as shown in FIG. 1b, the leftmost data bit 108 is a "1." Accordingly, using sign-extension, all of the 24 leftmost bit spaces 106 are filled with "1" bits. The data is then allowed to be transferred to the processor for arithmetic manipulation. Another type of bit-extension is zero-extension in which the 24 leftmost bit spaces 106 are filled with "0" bits regardless of the value of the leftmost data bit 108.

Because they are separate processes, data alignment and bit-extension are difficult to perform in the same clock cycle. Often, multiple clock cycles must be used to perform both the processes, resulting in undesirably poor performance. US-A-6,085,289 discloses a load data formatter performing data alignment and sign extension using a sign extend selector and a bus driver device. US-A-5,761,469 discloses a memory hierarchy comprising a data cache coupled to an aligning unit and a sign extension unit. US-A-5,819,117 discloses a processor system with a byte permutation unit comprising a multiplexer logic unit that rearranges a data word as determined by the byte order and a sign extension unit. EP-A-0 902 360 discloses a data load and store buffer comprising an align unit performing alignment and sign extension. US-B1-6,539,467 discloses a mobile communications device with an antenna and comprises a processor with a load store unit and cache, the processor performing right shifting with sign extension.

### SUMMARY

The problems noted above are addressed by a method and a processor for performing the same as defined in claims 1 and 6.

The invention also resides in a communication system comprising the above processor.

### BRIEF DESCRIPTION OF THE DRAWINGS

For a detailed description of exemplary embodiments of the invention, reference will now be made to the accompanying drawings in which:
FIG. 1a shows a block diagram of 8 data bits right-aligned in a 32-bit data bus;
FIG. 1b shows a block diagram of the bit-extension of the data bus in FIG. 1a;
FIG. 2 shows a block diagram of a processor comprising a load/store unit that aligns data and performs bit-extensions in parallel, in accordance with a preferred embodiment of the invention;
FIG. 3 shows a detailed block diagram of the load/store unit of FIG. 2, in accordance with embodiments of the invention;
FIG. 4 shows a circuit schematic of the load/store unit of FIG. 3, in accordance with a preferred embodiment of the invention;
FIG. 5 shows a flow diagram describing a method that may be implemented in the load/store unit of FIG. 4, in accordance with embodiments of the invention; and
FIG. 6 shows an illustrative embodiment of a system containing the features described in FIGS. 2-5.

Certain terms are used throughout the following description and claims to refer to particular system components. As one skilled in the art will appreciate, companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect or direct electrical connection. Thus, if a first device couples to a second device, that connection may be through a direct electrical connection, or through an indirect electrical connection via other devices and connections. Further, the term "target data" or "targeted data" refers to data that is requested by a load instruction.

### DETAILED DESCRIPTION OF EMBODIMENTS

The following discussion is directed to various embodiments of the invention.

Disclosed herein is a process and apparatus by which data may be both aligned and bit-extended preferably in a single clock cycle, thus substantially improving processor performance over other data alignment and bit-extension techniques. As described below, data alignment and bit-extension are performed simultaneously (i.e., in parallel), thus enabling both processes to be performed within a single clock cycle.

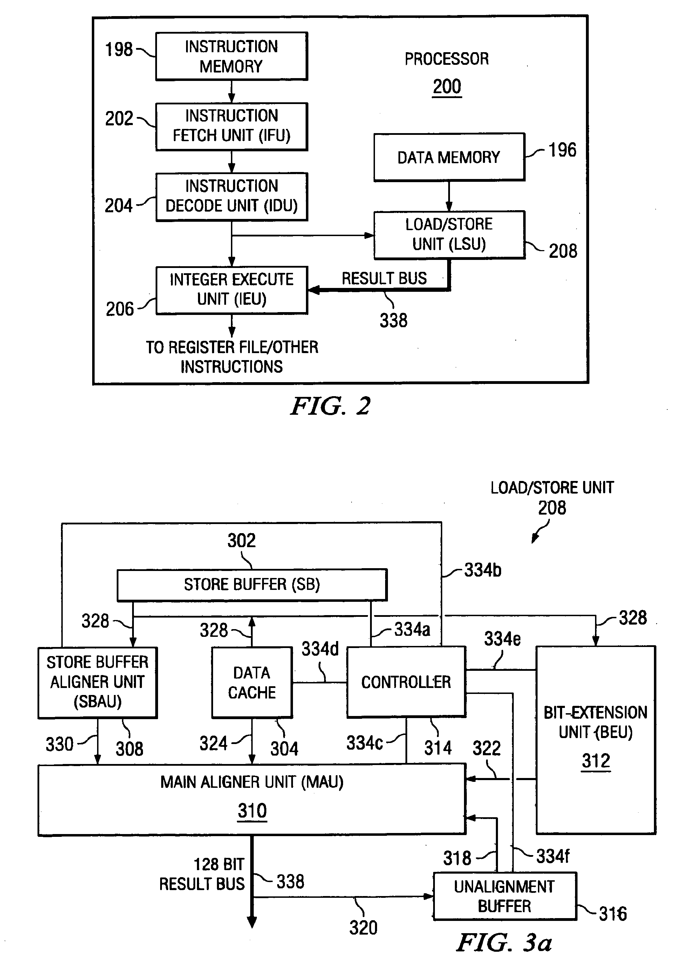

FIG. 2 shows a processor 200 that comprises, among other things, an instruction memory 198, a data memory 196, an instruction fetch unit (IFU) 202, an instruction decoder unit (IDU) 204, an integer execute unit (IEU) 206 and a load/store unit (LSU) 208. The IFU 202 fetches instructions from the memory 198 that are to be executed by the processor 200. The IDU 204 decodes the instructions and, based on the type of the instructions, routes the instructions accordingly. For example, an instruction that requires an arithmetic operation, such as an addition operation, may be routed to the IEU 206. Instructions that require data to be loaded from, or stored into, storage (such as a data cache, not specifically shown) may be routed to the LSU 208. For instance, if the instruction is a load instruction, then the target data is fetched using the LSU 208 and is sent via result bus 338 to the IEU 206 to be used in arithmetic operations.

FIG. 3a shows a detailed block diagram of the LSU 208. The LSU 208 comprises, among other things, a store buffer (SB) 302, a data cache 304, an SB aligner unit (SBAU) 308 coupled to the SB 302 by way of data bus 328, and a main aligner unit 310 coupled to the SBAU 308 via data bus 330 and to the data cache 304 via data bus 324. The LSU 208 also comprises an unalignment buffer 316 coupled to the main aligner unit 310 via data bus 320 and feedback loop 318. Further, the LSU 208 comprises a bit extension unit (BEU) 312 that is provided with data from the SB 302 and the data cache 304 via data bus 328. The BEU 312 outputs data to the main aligner unit (MAU) 310 via data bus 322. Data that is aligned and bit-extended in the MAU 310 may be output to the IEU 206 via a 128-bit result bus 338. Although, in the embodiments discussed herein, the result bus 338 is shown to be 128 bits wide, in other embodiments, the width of the result bus 338 may be different. Further still, the LSU 208 may comprise a controller 314 that is coupled to the SB 302, the SBAU 308, the MAU 310, the data cache 304, the BEU 312, and the unalignment buffer 316 by way of data buses 334a-334f, respectively.

The data cache 304 stores copies of data recently fetched from a data memory 196 and may be of any suitable size. Data retrievals from the data cache 304 generally are faster than data retrievals from memory. As such, the presence of the data cache 304 improves processor performance by supplying data for load operations faster than the data can be loaded from memory. The SB 302 is primarily used during store operations. Data that is to be stored in a store operation is generally speculative in nature (i.e., there may still be branches, exceptions, etc.) and thus the data cannot be committed to memory or to a data cache. As such, before data is stored to the data cache 304, it is first temporarily stored to the SB 302 so that speculative data is not stored into the data cache 304. Only when it is determined by the controller 314 that data in the SB 302 can safely be stored to the data cache 304 (i.e., the data is non-speculative and there are no branches, exceptions, etc.) is the data actually stored to the data cache 304.

The data cache preferably is organized as a plurality of "lines" that are 16 bytes (i.e., 128 bits) each. Data is preferably loaded from the data cache 304 one line (e.g., 16 bytes) at a time. Although a load instruction received by the controller 314 from the IDU 204 may specify less than 16 bytes of data be loaded, data may still be loaded 16 bytes at a time: the target data plus additional data (i.e., the entire "cache line"). Thus, not all of the data that is loaded from the data cache 304 is data targeted by the load instruction. The MAU 310 organizes the 128 bits (i.e., 16 bytes) of data loaded from the data cache 304. For example, the MAU 310 may extract and separate the data targeted by the load instruction from the remainder of the 16 data bytes.

FIG. 3b shows the 128-bit result bus 338 in greater detail. In at least some embodiments, the 128 bits of the result bus 338 are divided into multiple portions, each portion containing data bits intended for different logic in the processor 200. As shown in the FIG., the 32 rightmost bit spaces 352 preferably are reserved for data targeted by the load instruction. The rest of the data bits (i.e., the 96 leftmost bit spaces 350) may contain the remainder of the 16 data bytes loaded from the data cache 304. Data bits in these bit spaces 350 may be used by other logic on the processor 200 as necessary.

Different load instructions require different amounts of data from the data cache 304. One load instruction might require 8 bits, another might require 16 bits, and yet another load instruction might require 32 bits. In the case of a load instruction that requires 32 bits to be loaded from the data cache 304, no bit extension needs to be performed on the 32 rightmost bit spaces 352, since all of these bit spaces 352 are filled with target data.

However, in the case of load instructions targeting less than 32 bits (e.g., 16 bits or 8 bits), all of the 32 rightmost bit spaces 352 are not filled with the target data. More specifically, although such load instructions require less than the 32 bit spaces 352 reserved for target data, 128 bits (i.e., 16 bytes) are still loaded each time the data cache 304 is accessed. Thus, because the bit spaces 352 are reserved for target data, and there may be only 8 bits or 16 bits of target data, some of the bit spaces 352 may be left vacant. For example, if 8 bits of data are targeted by the load instruction, 128 bits of data will still be loaded from the data cache 304. However, only 8 bits of these 128 bits will be used for the load instruction. The remaining 120 bits will be used by other logic for other purposes. The 8 data bits targeted by the load instruction are assigned to the 8 rightmost bit spaces within the bit spaces 352. Naturally, some of these 120 bits (i.e., 24 bits) will be discarded as deemed appropriate by the controller 314. Because the bit spaces 352 are reserved for target data, preferably only the 8 data bits targeted by the load instruction are assigned to 8-bit spaces within the 32-bit spaces 352. The remaining 24 bit spaces 352 are left vacant. In at least some embodiments, less than 128 bits may be retrieved from each data cache access, such as for power conservation. Also, because a preferable maximum of 32 bits is occupied by target data, the remaining 96 bits may be used by other system units, as mentioned above, or the 96 bits may be discarded.

As mentioned above, if the 32 rightmost bit spaces 352 are all occupied by data targeted by the load instruction, no bit extension is performed. However, in the case of a load operation that requires only 8 bits or 16 bits, a bit extension is performed to fill the vacant 24 bits or 16 bits within the 32 rightmost bit spaces 352. More specifically, the controller 314 determines whether the most significant bit (i.e., the leftmost data bit) in the 32 rightmost bit spaces 352 is a "0" or a "1." For example, if the bit spaces 352 contain only 8 bits of target data, then the controller 314 checks the status of the most significant bit (i.e., 8^{th} bit from the right). Similarly, if the bit spaces 352 contain only 16 bits, then the controller 314 checks the status of the most significant bit (i.e., 16^{th} bit from the right). In either case, if the most significant bit is a "0," then the controller 314 causes the BEU 312 to fill any vacant bit spaces 352 with "0" bits. Similarly, if the most significant bit is a "1," then the controller 314 causes the BEU 312 to fill any vacant bit spaces 352 with "1" bits.

At the time that the 128 bits are loaded from the data cache (i.e., within the same clock cycle), the BEU 312 is supplied with a copy of the most significant bit of each of the 16 bytes. Thus, the BEU 312 is supplied with at least 16 bits. The BEU 312 is supplied with the most significant bit of each of the 16 bytes because the data targeted by the load instruction has not yet been separated from data not targeted by the load instruction. For example, a load instruction requires 8 bits of data from the data cache 304. Of the 16 bytes of data loaded from the data cache 304 at a time, the targeted 8 bits are found in the 7^{th} byte. Accordingly, the BEU 312 uses the most significant bit of the 7^{th} data byte to perform the sign extension. Thus, as shown in FIG. 3c, the 32 rightmost bit spaces 352 may be filled with the 7^{th} byte of the 16 bytes from the data cache, where the 7^{th} byte is right-aligned. The remaining 24 bits 375 of the bit spaces 352 are all filled with copies of the most significant bit 376 of the 7^{th} data byte. In this case, the most significant bit 376 of the 7^{th} data byte is a "0." Accordingly, 8 of the bit spaces 352 are filled with the data targeted by the load instruction (i.e., the 7^{th} byte), and the remainder of the bit spaces 352 are filled with "0" bits.

A load instruction may comprise the data cache address where the data targeted by the load instruction may be found. However, in cases where the SB 302 is storing data destined for the same data cache address as that specified by the load instruction, data may be loaded from the SB 302 instead of the data cache 304 (known as "store buffer forwarding"). In this way, the most current data intended for that particular address is retrieved, instead of the less recent data that may be found at that address in the data cache 304. This data loaded from the SB 302 is aligned by the SBAU 308 and then the aligned bits are transferred to the MAU 310 via the data bus 330. In the MAU 310, these data bits then are aligned onto the result bus 338 along with any other bits from the data cache 304, as described in further detail below.

As mentioned above, data is loaded from the data cache 16 bytes at a time. In some cases ("overlap conditions"), due to its location in the data cache, part of the data targeted by a load instruction may be included in a first 16-byte load, and the remainder of the target data may be included in a second (i.e., subsequent) 16-byte load. For example, a load instruction may require 2 bytes of data from the data cache 304 in two different lines. Accordingly, 16 bytes are loaded from the data cache 304 in a first line. The 16^{th} byte may be one of the bytes of target data. This byte is temporarily stored in the unalignment buffer 316. The other byte of the target data is still in the data cache 304 in a second line. Thus, to retrieve the other target data byte, a second 16-byte load from the data cache 304 is performed. While this second 16-byte load is being performed, the first byte that is stored in the unalignment buffer 316 is routed back to the MAU 310 via the data bus 318. In this way, the MAU 310 is provided with both of the target data bytes at the same time. The MAU 310 then may align both data bytes on the 128-bit result bus 338 as necessary. Data on the result bus 338 then is forwarded to the IEU 206 for further processing.

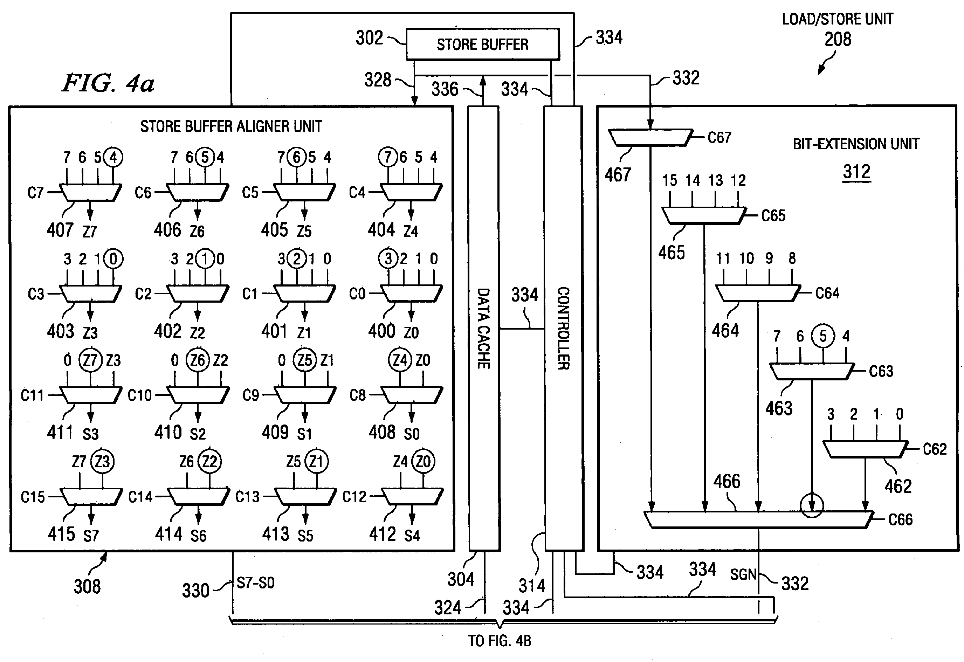

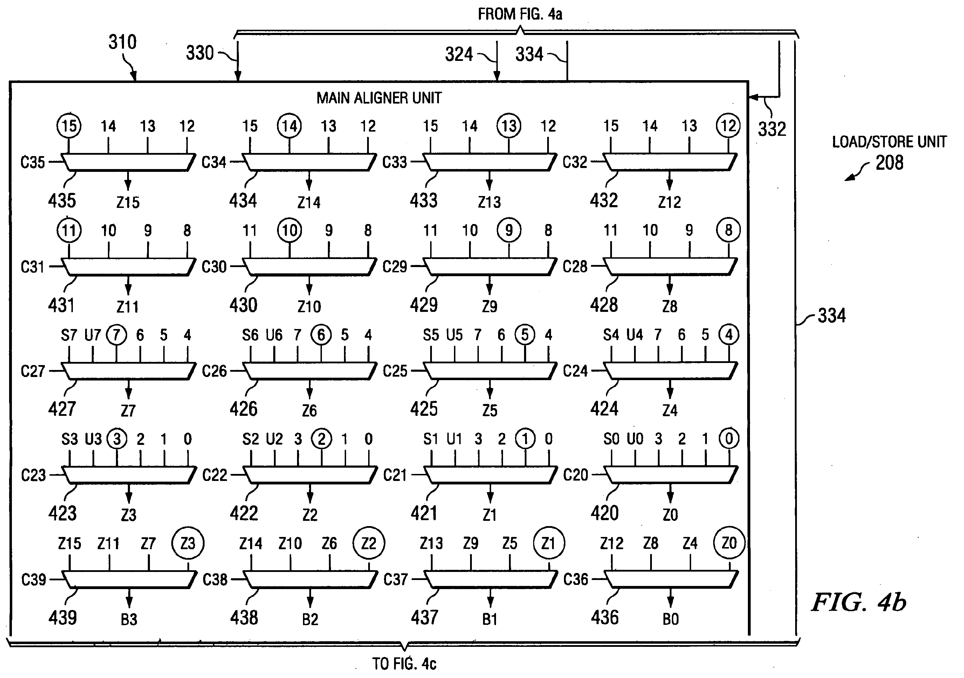

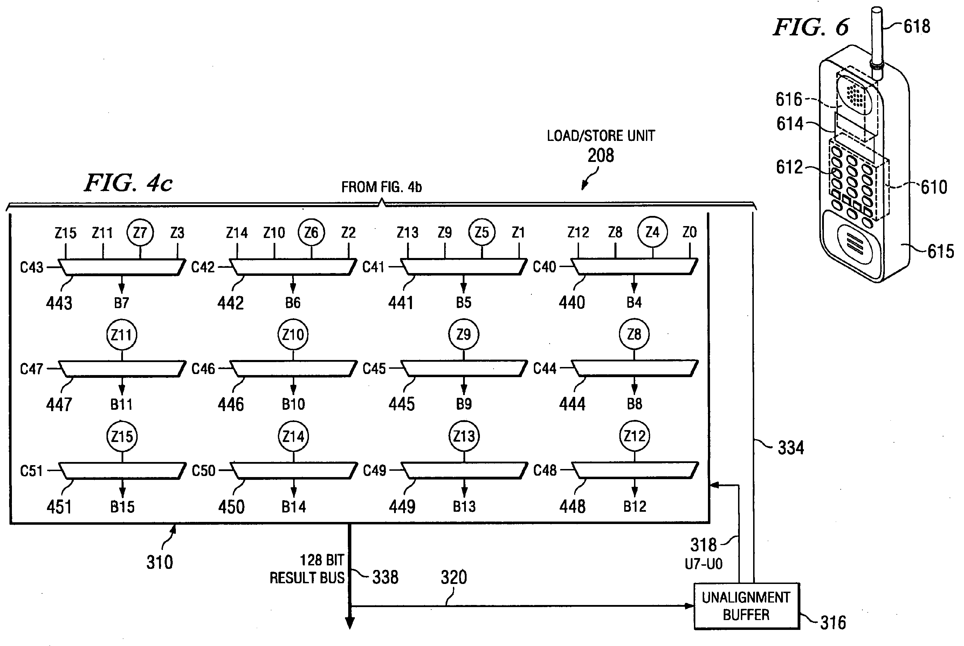

FIG. 4 shows a detailed circuit schematic of the LSU 208. Specifically, the SBAU 308 of the LSU 208 comprises a plurality of multiplexers 400 - 415. The SBAU 308 is provided with 8 bytes of data at a time from the SB 302. Inputs to the multiplexers 400 - 403 include bytes 0 - 3. Inputs to the multiplexers 404 - 407 include bytes 4 - 7. The outputs of multiplexers 400 - 403 are labeled z0 - z3, respectively. The outputs of multiplexers 404 - 407 are labeled z4 - z7, respectively. Inputs to the multiplexer 408 include z0 and z4. Inputs to the multiplexers 409 include 0, z5 and z1. Inputs to the multiplexer 410 include 0, z6 and z2. Inputs to the multiplexer 411 include 0, z7 and z3. Inputs to the multiplexer 412 include z0 and z4. Inputs to the multiplexer 413 include z1 and z5. Inputs to the multiplexer 414 include z2 and z6. Inputs to the multiplexer 415 include z3 and z7. Outputs of the multiplexers 408 - 415 are labeled S0 - S7, respectively. Control signals to each of the multiplexers 400 - 415 may be provided by the controller 314.

The 8 data bytes sent from the SB 302 to the SBAU 308 during a store buffer forwarding process are aligned by the SBAU 308 before being output to the MAU 310. For example, the 8 data bytes are labeled 0 - 7 and arrive at the SBAU 308 in the order 0 - 7. However, in this example, the bytes may need to be output to the MAU 310 in the order 7 - 0. Accordingly, as indicated by the circles around some of the multiplexer input signals, the controller 314 adjusts multiplexer control signals such that the output z0 of the multiplexer 400 is byte 3, the output z1 of the multiplexer 401 is byte 2, the output z2 of the multiplexer 402 is byte 1, the output z3 of the multiplexer 403 is byte 0, the output z4 of the multiplexer 404 is byte 7, the output z5 of the multiplexer 405 is byte 6, the output z6 of the multiplexer 406 is byte 5, and the output z7 of the multiplexer 407 is byte 4.

The outputs of the multiplexers 408 - 415 are selected such that the 8 bytes input into the SBAU 308 (i.e., in the order 0 - 7) are output on the output bytes S0 - S7 in the order 7 - 0. Specifically, the control signals to the multiplexers 408 - 415 are chosen by the controller 314 such that the output S0 of the multiplexer 408 is z4 (i.e., as explained above, z4 is the same as the output of multiplexer 404, which is byte 7), the output S1 of the multiplexer 409 is z5 (i.e., byte 6), the output S2 of the multiplexer 410 is z6 (i.e., byte 5), the output S3 of the multiplexer 411 is z7 (i.e., byte 4), the output S4 of the multiplexer 412 is z0 (i.e., byte 3), the output S5 of the multiplexer 413 is z1 (i.e., byte 2), the output S6 of the multiplexer 414 is z2 (i.e., byte 1), and the output S7 of the multiplexer 415 is z3 (i.e., byte 0). Thus, the 8 bytes from the SB 302 were input into the SBAU 308 in the order 0 - 7, and the multiplexers 400 - 415, using control signals from the controller 314, rearrange the 8 bytes so that the output bytes S0 - S7 are in the order 7 - 0.

The MAU 310 functions in a manner similar to the SBAU 308. The output bytes S0 - S7 are input into the MAU 310 from the SBAU 308, in the case of a store buffer forwarding situation as previously described. However, in most cases, data that is aligned by the MAU 310 is retrieved from the data cache 304, preferably 16 bytes at a time. These 16 bytes may be labeled 0 - 16. Still referring to FIG. 4, the MAU 310 comprises multiplexers 420 - 451. The inputs to the multiplexers 420 - 423 include bytes 0 - 3. The inputs to multiplexers 424 - 427 include bytes 4 - 7. The inputs to multiplexers 428 - 431 include bytes 8 - 11. The inputs to multiplexers 432 - 435 include bytes 12 - 15. The outputs of multiplexers 420 - 435 are z0 - z15, respectively. In cases of store buffer forwarding, however, the outputs z0 - z7 of multiplexers 420 - 427 may be superseded by some or all of the bytes S0 - S7 from the SBAU 308.

The multiplexers 436, 440 are provided with inputs z0, z4, z8 and z12. The multiplexers 437, 441 are provided with inputs z1, z5, z9 and z13. The multiplexers 438, 442 are provided with inputs z2, z6, z10 and z14. The multiplexers 439, 443 are provided with inputs z3, z7, z11 and z15. The multiplexers 444 - 451 are provided with inputs z8 - z15, respectively. Each of the multiplexers 400 - 451 is provided with a control signal C0 - C51, respectively, from the controller 314.

The controller 314 assigns control signals to the multiplexers 420 - 451 such that the 16 data bytes loaded from the data cache 304 are rearranged and aligned as needed by the load instruction. For example, a load instruction requests bytes 0, 1, 2 and 3 (i.e., 32 bits) from the data cache 304. Accordingly, 16 bytes are first loaded from the data cache 304 into the MAU 310. The controller 314 sends control signals to the multiplexers 420 - 435 such that multiplexers 420 - 435 allow input bytes 0 - 15 to pass through, respectively. Because the load instruction requires data bytes 0, 1, 2 and 3, the bytes 0, 1 2 and 3 pass through the multiplexers 436 - 439, respectively. In this way, the target 32 data bits (i.e., 4 bytes) are assigned to the 32 rightmost bit spaces 352 of the 128-bit result bus 338. Because all of the bit spaces 352 are full, there is no need for a bit extension to be performed. The remaining 96 leftmost bit spaces 350 are assigned values by the multiplexers 440 - 451. Multiplexers 440 - 451 may allow byte inputs z4 - z15 to pass through, respectively, although any other suitable arrangement of bytes in the 96 leftmost bit spaces 350 may be used. Once the result bus 338 is full of 128 bits, the data on the result bus 338 is transferred to other logic on the processor 200, such as the IEU 206, for further processing.

As mentioned above, because the 32 rightmost bit spaces 352 all were filled with target data bits, there was no need for a bit (e.g., sign) extension to be performed. However, if the load instruction requests only 16 bits, for example, then a sign extension may be performed. For example, a load instruction requires data byte 5 to be loaded from the data cache 304 and sent to the IEU 206. Accordingly, 16 bytes are loaded from the data cache 304. Multiplexers 420 - 423 may allow any suitable bytes to pass through, except for byte 5. Multiplexer 424 may allow the data byte 5 to pass through. Multiplexers 425 - 435 may allow any suitable bytes to pass through, except for byte 5. The controller 314 outputs control signals to the multiplexer 436 such that the output z4 (i.e., byte 5) of the multiplexer 424 passes through. Because the load instruction only targets 1 byte of data, and because the 32 rightmost bit spaces 352 of the result bus 338 are reserved for target data, the multiplexers 437 - 439 may allow no bytes to pass through, thus leaving 24 of the 32 rightmost bit spaces 352 vacant. The controller 314 also may set control signals to the multiplexers 440 - 451 such that any suitable combination of data bytes passes through.

Because 24 of the 32 rightmost bit spaces 352 are vacant, a sign extension is performed to fill these 24 bit spaces 352. A sign extension is performed using the BEU 312. The BEU 312 comprises, among other things, data cache sign bit alignment multiplexers 462 - 465. The outputs of the multiplexers 462 - 465 are coupled to the inputs of the multiplexer 466. The multiplexers 462 - 465 are provided with a total of 16 bits as inputs. The multiplexers 462-465 also are provided with control signals C62 - C65 from the controller 314. Specifically, the multiplexer 462 has the most significant bits of bytes 0 - 3 as inputs. The multiplexer 463 has the most significant bits of bytes 4 - 7 as inputs. The multiplexer 464 has the most significant bits of bytes 8 - 11 as inputs. The multiplexer 465 has the most significant bits of bytes 12 - 15 as inputs. Each of these 16 bits is a copy of the most significant bit of each of the 16 bytes loaded from the data cache 304. Because sign extension is performed by filling vacant bit spaces 352 with the most significant bit of the target data in the 32 rightmost bit spaces 352 (e.g., most significant bit 376 in FIG. 3c), each of these 16 bits is kept ready to be supplied to the MAU 310. Which of these 16 bits is actually supplied to the MAU 310 depends on the most significant byte in the 32 rightmost bit spaces 352. Continuing with the previous example, byte 5 is stored in the bit spaces 352 (right-aligned). The remaining 24 bits in the bit spaces 352 are vacant. In a sign extension process, these 24 bits may be filled with copies of the most significant bit of byte 5. The most significant bit of byte 5 is supplied as an input to the multiplexer 463. As indicated by the circle around the input corresponding to the most significant bit of byte 5, the multiplexer allows the most significant bit of byte 5 to pass through. The multiplexer 466 then chooses the output of multiplexer 463 (i.e., the most significant bit of byte 5) as the input signal that is allowed to pass through the multiplexer 466, based on a control signal C66 provided by the controller 314. Thus, the most significant bit of byte 5 is supplied to the MAU 310. The MAU 310 reproduces the most significant bit of byte 5 and fills each of the vacant bit spaces 352 with copies of the most significant bit of byte 5, thus completing the sign extension process. A similar process may be used for load instructions that require 16 bits of data from the data cache 304.

In the case of a store buffer forwarding scenario, for example, the multiplexer 436 may allow the output of the multiplexer 420 to pass through the multiplexer 436. The output of the multiplexer 420 may, in this store buffer forwarding case, be byte S0 from the SBAU 308. Furthermore, the remaining 32 rightmost bit spaces 352 may be left vacant (i.e., the load instruction only targeted 1 byte of data). Thus, a sign extension may be performed. To perform a sign extension, a copy of the most significant of byte S0 may be targeted to fill the vacant bit spaces in the bit spaces 352. This most significant bit of byte S0 may be available from the multiplexer 467, which is controlled by the controller 314 using a control signal C67. The multiplexer 467 receives as inputs the most significant bit of each of the 8 bytes transferred from the SB 302 to the SBAU 308. Thus, if the MAU 310 requires the most significant bit of byte S0, then the controller 314 issues control signals to the multiplexers 467, 466 causing the multiplexers 467, 466 to allow the most significant bit of S0 to pass through the multiplexers 467, 466 to the MAU 310. Upon arrival at the MAU 310, the most significant bit of S0 is used to fill the vacant bit spaces in the 32 rightmost bit spaces 352. Similarly, if the MAU 310 requires the most significant bit of byte S6, then the controller 314 issues control signals to the multiplexers 467, 466 causing the multiplexers 467, 466 to allow the most significant bit of S6 to pass through the multiplexers 467, 466 to the MAU 310. The MAU 310 fills vacant bit spaces in the 32 rightmost bit spaces 352 with copies of the most significant bit of S6. Because the data alignments performed in the MAU 310 (and/or the SBAU 308) occur in parallel with the sign extension selections performed by the BEU 312, only one clock cycle is needed, thus providing substantial performance advantages over other data alignment and sign extension techniques.

As described above, in some cases, due to the locations of various data bytes in the data cache 304, one 16-byte data loaded may not be sufficient to gather all of the data targeted by a load instruction. For example, during a first clock cycle, 16 data bytes are loaded from the data cache 304. Only one of the two targeted bytes is present in these 16 bytes. This data byte is aligned by the MAU 310 and is stored in the unalignment buffer 316. In a second clock cycle, another 16 data bytes are loaded from the data cache 304. At the same time, the first targeted byte stored in the unalignment buffer 316 is sent back to the MAU 310 as byte U0. In this way, MAU 310 has both the first and second targeted bytes. Instead of feeding one of the outputs z0, z4, z8 or z12 into the multiplexer 436, the controller 314 may feed the multiplexer 436 the byte U0 instead. Likewise, the controller 314 may adjust the multiplexer control signals such that the multiplexer 437 is fed the second targeted data byte. In this way, the first and second targeted data bytes are properly aligned in the 32 rightmost bit spaces 352. Within the second clock cycle, the bit spaces 352 may be sign extended and other multiplexer inputs may be chosen as desired. Once the result bus 338 is filled, the data may be output to the IEU 206 for further processing.

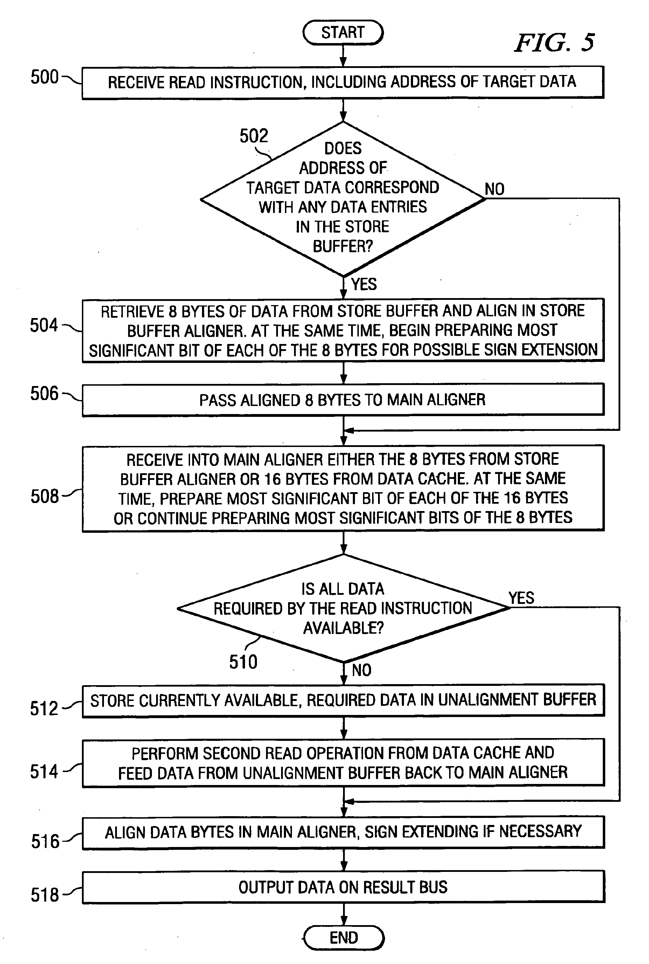

FIG. 5 shows a flow diagram of the process described above. The process may begin by receiving a load instruction that includes the address of the target data (block 500). The instruction may be received from, for example, an instruction decode unit or some other such unit. The process may continue by determining whether the address of the target data corresponds with any data entries in the store buffer (block 502). If the address indeed corresponds with data entries in the store buffer, then a store buffer forwarding scenario occurs, whereby 8 bytes of data are retrieved from the store buffer and aligned in a store buffer aligner. At the same time, the process comprises preparing the most significant bit of each of the 8 bytes for a possible sign extension (block 504). The 8 bytes subsequently may be passed to the main aligner (block 506). Regardless of whether the address corresponds with data entries in the store buffer, the process may continue by receiving into the main aligner either the 8 bytes from the store buffer (i.e., in a store buffer forwarding scenario) or 16 bytes fetched from the data cache. At the same time, the process may begin preparing the most significant bit of each of the 16 bytes or may continue preparing the most significant bits of the 8 bytes, depending on whether data is loaded from the store buffer or from the data cache (block 508).

The process may continue by determining whether all of the data targeted by the load instruction is available to the main aligner (block 510). If all of the targeted data is available, then the process may align the data bytes in the main aligner, performing a sign extension if necessary (block 516). The data then may be output onto the result bus (block 518). Otherwise, if all of the targeted data is not available, then the process may comprise storing whatever data is currently available in an unalignment buffer (block 512). The process then may perform a second load operation from the data cache and also may feed the data in the unalignment buffer back into the main aligner (block 514). Once the main aligner contains the data targeted by the load instruction, the main aligner may align the data bytes, performing a sign extension if necessary (block 516). The data then may be output onto the result bus (block 518) and sent to other logic for further processing.

FIG. 6 shows an illustrative embodiment of a system comprising the features described above. The embodiment of FIG. 6 comprises a battery-operated, wireless communication device 615. As shown, the communication device includes an integrated keypad 612 and a display 614. The load/store unit (LSU) 208 and/or the processor 200 comprising the LSU 208 may be included in an electronic package 610 which may be coupled to keypad 612, display 614 and a radio frequency (RF) transceiver 616. The RF circuitry 616 preferably is coupled to an antenna 618 to transmit and/or receive wireless communications. In some embodiments, the communication device 615 comprises a cellular (e.g., mobile) telephone.

The above discussion is meant to be illustrative of the principles and various embodiments of the present invention. Numerous variations and modifications will become apparent to those skilled in the art once the above disclosure is fully appreciated. It is intended that the claimed invention be interpreted to embrace all such variations and modifications.

## Claims

1. A method, comprising:
receiving by a first logic (314) a load instruction, said load instruction specifying target data;
loading a plurality of data bytes in response to a load instruction;
assigning a predetermined number of bits (352) of a data bus (338) to the target data;
using said first logic (314) to provide second control signals (C62-C67) determining the most significant bit of the target data of the plurality of data bytes;
using a second logic (310, 312) which receives said plurality of data bytes and arranges the target data from the received plurality of data bytes onto said data bus (338) using first control signals (C20-C51) from the first logic (314), wherein the first logic (314) is arranged to set the first control signals (C20-C51) such that the loaded plurality of data bytes are rearranged and aligned as specified by the load instruction;
using the second logic (310, 312) to perform a sign extension on the data bus (338) using said second control signals (C62-C67) if the number of target data bits specified by said load instruction is less than said predetermined number of bits (352) assigned to the target data.

2. The method of Claim 1, further comprising loading said plurality of data bytes from a store buffer (302).

3. The method of Claim 1 or 2, further comprising storing a first data byte in a temporary storage module (316) while a second data byte is loaded from the data cache (304) in response to a second load instruction.

4. The method of Claim 3, further comprising using the second logic (310) to substantially simultaneously arrange the first data byte and the second data byte onto the data bus (318).

5. The method of any of Claims 1 - 4, wherein determining the most significant bit, arranging the target data from the received plurality of data bytes and performing the sign extension comprises determining the most significant bit, arranging the target data from the received plurality of data bytes and performing a sign extension within approximately one clock cycle.

6. A processor (200), comprising:
a first logic (314) adapted to provide second control signals (C62-C67) determining the most significant bit of target data of a plurality of data bytes loaded from a data cache (302, 304) in response to a load instruction specifying the target data, said first logic (314) furthermore providing first control signals (C20-C51);
a second logic (310, 312) coupled to the first logic (314) and adapted to receive said plurality of data bytes and to arrange the target data from the received plurality of data bytes onto a data bus (338) using first control signals (C20-C51), wherein the first logic (314) is arranged to set the first control signals (C20-C51) such that the loaded plurality of data bytes are rearranged and aligned as specified by the load instruction, the second logic (310, 312) further adapted to perform a sign extension on the data bus (338) using said second control signals (C62-C67) if the number of target data bits specified by said load instruction is less than a predetermined number of bits (352) of said data bus (338) assigned to the target data.

7. The processor of claim 6, wherein the second logic (310, 312) is adapted to arrange the target data from the received plurality of data bytes onto the data bus (338) and to perform the sign extension on the data bus within a single clock cycle.

8. The processor of Claim 6, wherein the second logic (310, 312) is coupled substantially in parallel to the first logic (314).

9. The processor of any of Claims 6 to 8, wherein at least one of the first and second logic comprises a plurality of multiplexers (400 to 466).

10. The processor of any of Claims 6 to 9, further comprising a buffer module (316) that stores at least some of the plurality of data bytes and returns the at least some of the plurality of data bytes to the first logic during a subsequent clock cycle.

11. A communications system comprising the processor of any of Claims 6 to 10.

12. The communications system of claim 11, where the communications system is one of: a wireless communication device, a mobile telephone, a battery-operated device or a personal digital assistant.

## Patentansprüche

1. Verfahren, umfassend:
Empfangen eines Ladebefehls durch eine erste Logik (314), wobei der Ladebefehl Solldaten spezifiziert;
Laden einer Vielzahl von Datenbytes in Reaktion auf einen Ladebefehl;
Zuordnen einer vorbestimmten Anzahl von Bits (352) eines Datenbusses (338) zu den Solldaten;
Verwenden der ersten Logik (314), um zweite Steuersignale (C62-C67) zur Verfügung zu stellen, welche das höchstwertige Bit der Solldaten der Vielzahl von Datenbytes bestimmen;
Verwenden einer zweiten Logik (310, 312), welche die Vielzahl von Datenbytes empfängt und Anordnen der Zieldaten der Vielzahl von empfangenen Datenbytes auf dem Datenbus (338) unter Verwendung erster Steuersignale (C20-C51) der ersten Logik (314), wobei die erste Logik (314) dazu eingerichtet ist, die ersten Kontrollsignale (C20-C51) so zu setzen, dass die geladene Vielzahl von Datenbytes neu angeordnet und ausgerichtet wird, so wie es durch den Ladebefehl festgelegt ist;
Verwenden der zweiten Logik (310, 312), um eine Vorzeichenerweiterung auf dem Datenbus (338) durchzuführen, wobei die zweiten Steuersignale (C62-C67) verwendet werden, wenn die Anzahl der Bits der Solldaten, welche durch den Ladebefehl festgelegt ist, geringer ist als die vorbestimmte Anzahl von Bits (352), welche den Solldaten zugeordnet ist.

2. Verfahren nach Anspruch 1, außerdem umfassend, Laden der Vielzahl von Datenbytes aus einem Speicherpuffer (302).

3. Verfahren nach Anspruch 1 oder 2, außerdem umfassend, Speichern eines ersten Datenbytes in einem Zwischenspeichermodul (316) während ein zweites Datenbyte in Antwort auf einen zweiten Ladebefehl aus dem Datencache (304) geladen wird.

4. Verfahren nach Anspruch 3, außerdem umfassend: Verwenden der zweiten Logik (310), um die ersten Datenbytes und die zweiten Datenbytes auf dem Datenbus (318) im Wesentlichen gleichzeitig anzuordnen.

5. Verfahren nach einem der Ansprüche 1 bis 4, wobei die Bestimmung des höchstwertigen Bits, das Anordnen der Solldaten aus der Vielzahl von empfangenen Datenbytes und die Durchführung der Vorzeichenerweiterung umfasst, die Bestimmung des höchstwertigen Bits, Anordnen der Solldaten aus der Vielzahl von empfangenen Datenbytes und Durchführen der Vorzeichenerweiterung näherungsweise innerhalb eines Taktzyklus.

6. Prozessor (200), umfassend:
eine erste Logik (314), welche dazu ausgelegt ist, zweite Steuersignale (C62-C67) zur Verfügung zu stellen, welche dazu ausgelegt sind, das höchstwertige Bit von Zieldaten einer Vielzahl von Datenbytes zu bestimmen, wobei die Datenbits aus einem Datencache (302, 304) in Antwort auf einen Ladebefehl, welcher die Solldaten spezifiziert, geladen werden, und wobei die erste Logik (314) außerdem erste Steuersignale (C20-C51) zur Verfügung stellt;
eine zweite Logik (310, 312), die mit der ersten Logik (314) gekoppelt ist und dazu ausgelegt ist, die Vielzahl von Datenbytes zu empfangen und die Zieldaten aus der Vielzahl von empfangenen Datenbytes auf einem Datenbus (338) anzuordnen, wobei hierzu erste Steuersignale (C20-C51) verwendet werden, und wobei die erste Logik (314) eingerichtet ist, erste Steuersignale (C20-C51) derart zu setzten, sodass die geladene Vielzahl von Datenbytes neu angeordnet und ausgerichtet wird, so wie es durch den Ladebefehl festgelegt ist, und wobei die zweite Logik (310,312) außerdem dazu ausgelegt ist, eine Vorzeichenerweiterung auf den Datenbus (338) durchzuführen, wobei hierzu die zweiten Steuersignale (C62-C67) verwendet werden, wenn die Anzahl von Zieldatenbits, welche durch den Ladebefehl festgelegt ist, geringer ist als eine vorbestimmte Anzahl von Bits (352) des Datenbus (338), der den Solldaten zugeordnet ist.

7. Prozessor nach Anspruch 6, wobei die zweite Logik (310, 312) dazu ausgelegt ist, die Solldaten der Vielzahl von empfangenen Datenbytes auf dem Datenbus anzuordnen und die Vorzeichenerweiterung auf dem Datenbus innerhalb eines Taktzyklus durchzuführen.

8. Prozessor nach Anspruch 6, wobei die zweite Logik (310, 312) im Wesentlichen parallel zu der ersten Logik (314) gekoppelt ist.

9. Prozessor nach einem der Ansprüche 6 bis 8, wobei zumindest die erste oder die zweite Logik eine Vielzahl von Multiplexern (400 bis 466) umfasst.

10. Prozessor nach einem der Ansprüche 6 bis 9, außerdem umfassend: ein Puffermodul (314), welches zumindest einige der Vielzahl von Datenbytes speichert und zumindest einige der Vielzahl von Datenbytes an die erste Logik in einem darauffolgenden Taktzyklus zurückgibt.

11. Kommunikationssystem, umfassend: den Prozessor nach einem der Ansprüche 6 bis 10.

12. Kommunikationssystem nach Anspruch 11, wobei das Kommunikationssystem eine der folgenden Vorrichtungen ist: eine drahtlose Kommunikationsvorrichtung, ein Mobiltelefon, eine batteriebetriebene Einheit oder ein digitaler persönlicher Assistent (PDA).

## Revendications

1. Procédé comprenant les étapes consistant à :
recevoir à l'aide d'une première logique (314) une instruction de chargement, ladite instruction de chargement spécifiant des données cibles ;
charger une pluralité d'octets de données en réponse à une instruction de chargement ;
attribuer un nombre prédéterminé de bits (352) d'un bus de données (338) aux données cibles ;
utiliser ladite première logique (314) de façon à fournir des seconds signaux de commande (C62 - C67) qui déterminent le bit de poids fort des données cibles de la pluralité d'octets de données ;
utiliser une seconde logique (310, 312) qui reçoit ladite pluralité d'octets de données et agence les données cibles à partir de la pluralité d'octets de données reçue sur ledit bus de données (338) en utilisant des premiers signaux de commande (C20 - C51) en provenance de la première logique (314), dans lequel la première logique (314) est agencée de façon à régler les premiers signaux de commande (C20 - C51) de telle sorte que la pluralité d'octets de données chargée soit réagencée et alignée comme le spécifie l'instruction de chargement ;
utiliser la seconde logique (310, 312) de façon à exécuter une extension de signe sur le bus de données (338) en utilisant lesdits seconds signaux de commande (C62 - C67) si le nombre de bits de données cibles spécifié par ladite instruction de chargement est inférieur audit nombre de bits prédéterminé (352) attribués aux données cibles.

2. Procédé selon la revendication 1, comprenant en outre le chargement de ladite pluralité d'octets de données à partir d'un tampon de stockage (302).

3. Procédé selon la revendication 1 ou la revendication 2, comprenant en outre une étape consistant à stocker un premier octet de données dans un module de stockage temporaire (316) tandis qu'un second octet de données est chargé à partir du cache de données (304) en réponse à une seconde instruction de chargement.

4. Procédé selon la revendication 3, comprenant en outre une étape consistant à utiliser la seconde logique (310) de façon à agencer de manière sensiblement simultanée le premier octet de données et le second octet de données sur le bus de données (318).

5. Procédé selon l'une quelconque des revendications 1 à 4, dans lequel l'étape consistant à déterminer le bit de poids fort, à agencer des données cibles à partir de la pluralité d'octets de données reçue et à exécuter l'extension de signe, comprend les étapes consistant à déterminer le bit de poids fort, à agencer les données cibles de la pluralité d'octets de données reçue et à exécuter une extension de signe en moins d'un cycle d'horloge approximativement.

6. Processeur (200) comprenant :
une première logique (314) adaptée de façon à fournir des seconds signaux de commande (C62 - C67) qui déterminent le bit de poids fort des données cibles d'une pluralité d'octets de données chargée en provenance d'un cache de données (302, 304) en réponse à une instruction de chargement qui spécifie les données cibles, ladite première logique (314) fournissant en outre des premiers signaux de commande (C20 - C51) ;
une seconde logique (310, 312) couplée à la première logique (314) et adaptée de façon à recevoir ladite pluralité d'octets de données et à agencer les données cibles de la pluralité d'octets de données reçue sur un bus de données (338) en utilisant les premiers signaux de commande (C20 - C51), dans lequel la première logique (314) est agencée de façon à régler les premiers signaux de commande (C20 - C51) de telle sorte que la pluralité d'octets de données chargée soit réagencée et alignée comme le spécifie l'instruction de chargement, la seconde logique (310, 312) est adaptée en outre de façon à exécuter une extension de signe sur le bus de données (338) en utilisant lesdits seconds signaux de commande (C62 - C67) si le nombre de bits de données cibles spécifié par ladite instruction de chargement est inférieur à un nombre de bits prédéterminé (352) dudit bus de données (338) attribués aux données cibles.

7. Processeur selon la revendication 6, dans lequel la seconde logique (310, 312) est adaptée de façon à agencer les données cibles à partir de la pluralité d'octets de données reçue sur le bus de données (33 8) et à exécuter l'extension de signe sur le bus de données en moins d'un seul cycle d'horloge.

8. Processeur selon la revendication 6, dans lequel la seconde logique (310, 312) est couplée sensiblement en parallèle à la première logique (314).

9. Processeur selon l'une quelconque des revendications 6 à 8, dans lequel l'une au moins de la première et de la seconde logique comprend une pluralité de multiplexeurs (400 à 466).

10. Processeur selon l'une quelconque des revendications 6 à 9, comprenant en outre un module de tampon (316) qui stocke certains au moins de la pluralité d'octets de données et les retourne à la première logique au cours d'un cycle d'horloge ultérieur.

11. Système de communication comprenant le processeur selon l'une quelconque des revendications 6 à 10.

12. Système de communication selon la revendication 11, dans lequel le système de transmissions fait partie du groupe constitué par : un dispositif de communication sans fil, un téléphone mobile, un dispositif à batterie ou un assistant numérique personnel.
